(19) **Europäisches Patentamt**
**European Patent Office**
**Office européen des brevets**

(11) **EP 3 130 382 B1**

(12) **EUROPEAN PATENT SPECIFICATION**

(45) Date of publication and mention
of the grant of the patent:
**07.08.2019 Bulletin 2019/32**

(51) Int Cl.:
**A63J 1/02** (2006.01)

(21) Application number: **16183553.3**

(22) Date of filing: **10.08.2016**

(54) **STAGE REPRESENTATION SYSTEM AND STAGE REPRESENTATION METHOD**

BÜHNENDARSTELLUNGSSYSTEM UND BÜHNENDARSTELLUNGSVERFAHREN

SYSTÈME DE REPRÉSENTATION D'ÉTAGE ET PROCÉDÉ DE REPRÉSENTATION D'ÉTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2015 JP 2015158555**

(43) Date of publication of application:
**15.02.2017 Bulletin 2017/07**

(73) Proprietor: **ISA Co., Ltd.
Yokohama-shi, Kanagawa 222-0036 (JP)**

(72) Inventor: **ISAYAMA, Kiyoshi
Yokohama-shi, Kanagawa 2220036 (JP)**

(74) Representative: **Kramer Barske Schmidtchen
Patentanwälte PartG mbB
European Patent Attorneys
Landsberger Strasse 300
80687 München (DE)**

(56) References cited:
**EP-A1- 0 504 867        EP-A1- 1 978 293
US-A1- 2013 294 067     US-A1- 2015 176 788**

EP 3 130 382 B1

**Description**

## BACKGROUND OF THE INVENTION

Field of the Invention

The present invention relates to a stage representation system and a stage representation method used for a stage such as a theater, a concert hall or a television studio.

Description of the Related Art

In recent years, there have been various representations for a stage in a theater, a concert hall, a television studio or others. For example, the inventor proposed a representation method using an illumination light typified by a light-emitting diode (LED) in Japanese Patent No. 5173231. Specifically, the LED is suspended via a suspension line from a ceiling of the stage. A large number of sets of the suspension line and the LED are provided. A three-dimensional object can be dynamically represented on the stage by dynamically controlling up/down-motions of the LEDs with the suspension lines and light-on/light-off of the LEDs depending on contents to be represented.

However, the method in Japanese Patent No. 5173231 results in more increase in number of suspension lines for up/down-motions of the LEDs as the number of LEDs is increased. Therefore, there can be a limitation to representable contents depending on spatial limitations on the stage.

US 2015/0176788 A1 relates to a stage representation device used on a stage of a theatre, wherein the stage representation device vertically moves a plurality of reflecting members each connected to a suspension line and reflecting light from a spotlight at a predetermined position in the air of the stage and adjusts the reflecting member to a predetermined angle.

US 2013/0294067 A1 relates to a ceiling suspended luminaire that can change its shape based on user-input, for example by hand gestures such as moving the hand up and down in the detection field of a sensor.

## SUMMARY OF THE INVENTION

The present invention provides a stage representation system according to claim 1, and a stage representation method according to claim 6.

According to the present invention, a novel stage-representation can be performed.

Further features of the present invention will become apparent from the following description of exemplary embodiments (with reference to the attached drawings).

## BRIEF DESCRIPTION OF THE DRAWINGS

Fig. 1 is a block diagram illustrating an example of a structure of a stage representation system according to a first embodiment;
Fig. 2 is a front view illustrating an example of a front view of a display panel according to the first embodiment;
Fig. 3 is a diagram illustrating an example of controlling the display panel at an arbitrary height in an arbitrary direction according to the first embodiment;
Fig. 4 is a diagram illustrating an example of a cross-section of a suspension line according to the first embodiment;
Fig. 5 is a diagram illustrating an example of wirings of the display panel according to the first embodiment;
Fig. 6A is a diagram illustrating an example of a representation effect according to the first embodiment;
Fig. 6B is a diagram illustrating another example of the representation effect according to the first embodiment;
Fig. 7A is a diagram illustrating another example of the representation effect according to the first embodiment;
Fig. 7B is a diagram illustrating another example of the representation effect according to the first embodiment;
Fig. 8A is a diagram illustrating another example of the representation effect according to the first embodiment;
Fig. 8B is a diagram illustrating another example of the representation effect according to the first embodiment; and
Fig. 9 is a diagram illustrating an example of a representation effect according to a second embodiment.

## DESCRIPTION OF THE EMBODIMENTS

Hereinafter, a specific description is provided with reference to the drawings according to embodiments of the present invention. However, technical elements according to the embodiments are only examples, and the scope of the present invention is not limited to those.

[First embodiment]

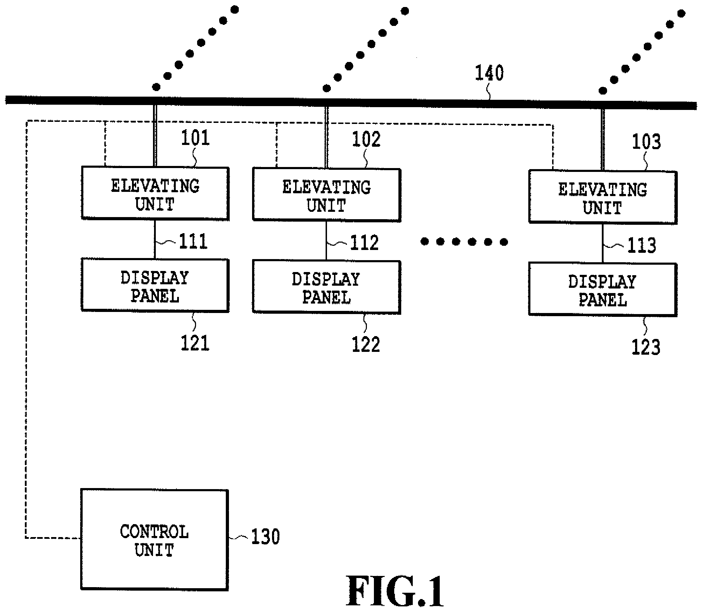

Fig. 1 is a block diagram illustrating an example of a stage representation system according to a first embodiment. The stage representation system is used for a stage such as a theater, a concert hall, a television studio or others. The stage representation system is also available irrespective of indoor or outdoor. The description is provided given that the following example is a stage representation system used in an indoor concert hall.

[Structure of stage representation system]

A stage representation system illustrated in Fig. 1 includes elevating units 101 to 103, suspension lines 111 to 113 whose lengths are adjusted by the elevating units 101 to 103, display panels 121 to 123 connected to the suspension lines 111 to 113 respectively, a control unit 130, and a baton 140 that suspends the elevating units. The control unit 130 controls winding up/down of the suspension lines with the elevating units 101 to 103 and further controls on/off-lighting and the amount of light of an illumination light arranged on the display panel. The control of the on/off lighting and the amount of light of the illumination light may be generically called light modulation.

Note that, three display panels are illustrated as an example for ease of the description in Fig. 1. Further, one suspension line and one elevating unit are illustrated to one display panel, but this is used only for describing the outline. The details of a relationship between the display panel, the suspension line, and the elevating unit will be described later. Further, although the baton 140 is illustrated as an example, a plurality of batons may be arranged and a set of the elevating unit, the suspension line, and the display panel may be arranged on the respective batons. Note that, the baton forms a base surface for suspension. In the case where the elevating unit is attached, any baton may be used. In an example for describing the following structure, the description provides with one set of the elevating unit 101, the suspension line 111, and the display panel 121 as a representative example. However, another set of the elevating unit, the suspension line, and the display panel can have the similar structure. Here, at least one set of the elevating unit, the suspension line, and the display panel may be arranged. Preferably, a plurality of sets thereof may be arranged.

The elevating unit 101 winds up/down the suspension line 111 with a motor for example. The suspension line 111 is for suspending the display panel 121. One display panel 121 is suspended with a plurality of suspension lines. The elevating unit 101 winds up/down the suspension lines by driving the motor under the control from the control unit 130, thereby adjusting the length of the suspension lines in space of the stage. The elevating unit adjusts the length of the suspension line 111 under the control from the control unit 130, thereby moving the display panel 121 in the up/down direction (vertical direction) in the space of the stage. Further, the elevating unit 101 adjusts the length of the suspension line to set a part of the lengths of the plurality of suspension lines to be different from the lengths of other suspension lines, thereby moving the direction of the display panel in the space of the stage at an arbitrary angle. The details will be described later. Note that, although the example of winding up/down the suspension line by the elevating unit 101 is described, any structure may be used with a mechanism for adjusting the length of the suspension line in the space of the stage.

As mentioned above, the position in the up/down (vertical) direction and the angle in the space of the stage can be appropriately controlled on the display panel 121 by adjusting the length of the suspension line 111 with the elevating unit 101. Note that, although the description is provided given that the elevating unit 101 is fixed to the baton 140 and the baton 140 is also fixed, in the case where the elevating unit 101 or the baton is movable, the display panel can be controlled to an arbitrary position such as a position in the horizontal direction or the depth side or front side of the stage.

[Example of display panel]

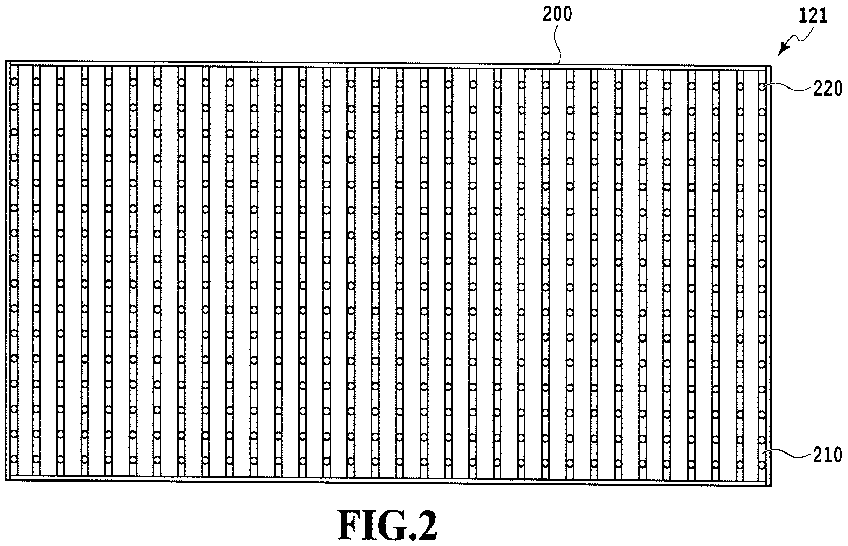

Fig. 2 is a front view illustrating an example of the display panel 121. The display panel 121 comprises, for example, four sides of a frame 200 of 1 m × 2 m made of aluminum. Further, bars 210 are arranged in slit shapes with acrylic quadrilateral tubes of 15 mm in width, 10 mm in depth, and 993 mm in length from the top side to the bottom side of the frame. An example of including 32 bars (base materials) is illustrated in Fig. 2. Furthermore, the spaces between respective bars (respective base materials) are opened. A plurality of illumination lights such as LEDs 220 is attached to the individual bars. The LEDs are attached to the bars at a constant interval, preferably, may be arranged at an equal interval. In the example illustrated in Fig. 2, 16 LEDs are arranged to each bar. Therefore, according to the present embodiment, 512 LEDs are attached to one display panel. The individual LEDs can emit light of red, blue, and green, and arbitrary color can be expressed by changing the amount of light thereof.

As mentioned above, a plurality of LEDs is attached to the display panel 121, and appropriate representation can be performed by controlling the on/off timing of lighting of the respective LEDs or modulating the amount of light thereof. Contents can be arbitrarily displayed on the display panel 121, for example, such as an electronic signboard. Further, one content may be displayed on the whole of a plurality of display panels by providing the plurality of the display panels as mentioned above.

Further, as illustrated in Fig. 2, the bars to which the LEDs are arranged in slit shapes are provided to the display panel 121 in the present embodiment. Therefore, the display panel 121 has transmittivity for partial transmission of the back side thereof. Thus, such an arrangement is adopted in which the plurality of display panels are arranged with a sense of depth from the front side (audience side) to the depth side of the stage, thereby the audience can visually recognize both display contents on the display panel on the front side and display contents on the display panel on the depth side. Accordingly, it is possible to provide video contents with a sense of depth.

The LED is lit on from the stage space in the darkness, thereby allowing the darkness at the back part to be used as a part of the contents. For example, by moving up/down the plurality of display panels while changing the angle, it is possible to perform representation as if the plurality of display panels are dancing and flying. Obviously, by controlling light modulation of the respective LEDs included in the display panel, it is possible to perform representation as if an arbitrary three-dimensional object is dancing and flying.

In the case where an artist exists, for example, on the depth side of the stage and the display panel is arranged on the front side of the artist, it is also possible to view a behavior of the artist from the audience side because display panels have the transmittivity. Further, the contents displayed with the behavior of the artist are dynamically changed on the display panel with partial transmittivity as mentioned above, thereby making it possible to perform a novel representation.

The control unit 130 controls the elevating unit and the display panel. For example, the control unit 130 issues an instruction for the amounts of winding up/down of the suspension line and the timings thereof to the elevating unit. The elevating unit performs winding up/down of the suspension line in accordance with the instruction. Thus, it is possible to arrange the display panel at an arbitrary height and direct the display panel at an arbitrary angle in the space of the stage. Further, the control unit 130 controls the on/off lighting and the amount of light of the LED to the display panel. The control unit individually controls the respective elevating units and the respective display panels. The control unit 130 issues an instruction of the amount of winding up/down of the suspension line to an arbitrary elevating unit and issues an instruction of the on/off lighting and the amount of light of the LED to an arbitrary display panel according to a predetermined program depending on the contents for the representation.

[Example of suspending display panel]

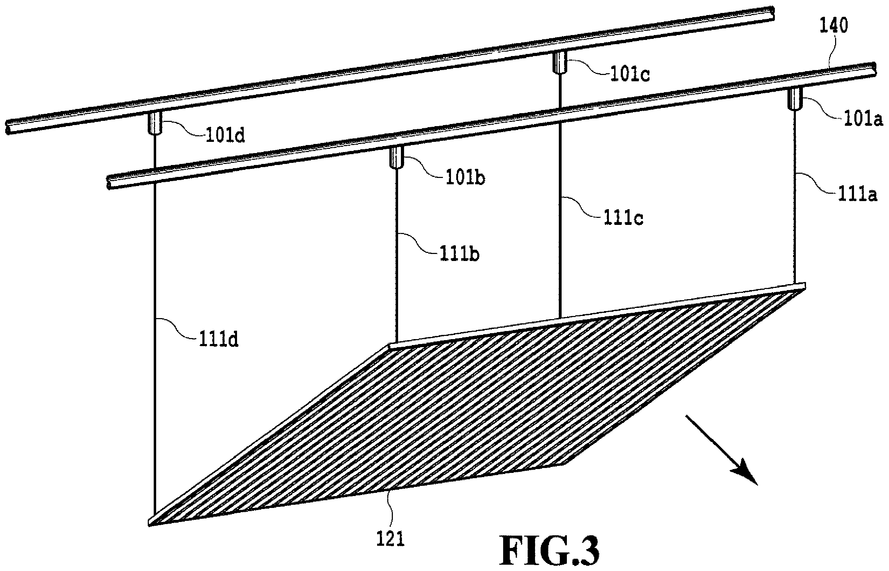

Fig. 3 is a diagram illustrating a state in which the elevating unit 101 is attached to the baton 140, the suspension line 111 is suspended from the elevating unit 101, and the display panel 121 is positioned at a predetermined height in the space of the stage with the suspension line, and is directed in a predetermined direction. Here, for ease of description, an example is provided with a structure in which one display panel is suspended. As illustrated in Fig. 3, one display panel is suspended with four suspension lines 111a to 111d according to the present embodiment. The suspension lines 111a to 111d are connected to four corners of the display panel 121. The elevating unit 101 also has four elevating units 101a to 101d corresponding to the respective suspension lines 111a to 111d.

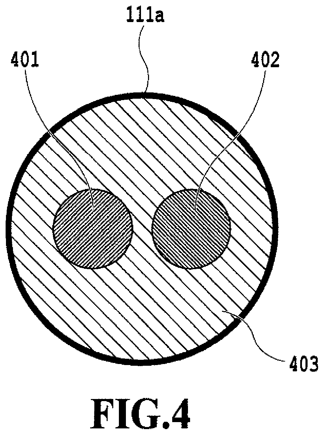

Fig. 4 is a diagram illustrating an example of a cross-section of the suspension line 111a. Although, the example of the suspension line 111a is described here, other suspension lines are similar thereto. The suspension line 111a of the present embodiment is a cable that integrally covers a power-supply cable 401 for supplying power to the LED and a control cable 402 for transmitting a control signal that controls the on/off lighting and the amount of light of the respective LEDs. The cable is formed by knitting an aramid fiber 403 to cover core lines, and configured to apply load to the aramid fiber 403.

As mentioned above, the suspension line 111a of the present embodiment has a function for physically controlling the position and direction of the display panel and a function for controlling the light modulation of the display panel. According to the present embodiment, the light modulation of the respective LEDs is controlled in accordance with the DMX standard. In the example in Fig. 3, one display panel is suspended with four suspension lines (control cables). Therefore, the light modulation of the LED is controlled with the number of channels obtained by multiplying the number of channels available for one control cable by 4. Regarding the suspension line (control cable) of the present embodiment, 510 channels can be sent with one packet 40 times per second based on the DMX standard. In the case where three channels for red, green, and blue are used for one LED, 16 LEDs are arranged per bar of the display panel, and the number of bars is 32. The total number of channels per display panel is as follows.

$$3 \times 16 \times 32 = 1536$$

Since 1536/510 = 3.01 is obtained, the respective LEDs of the display panel can be individually controlled with four suspension lines (control cables).

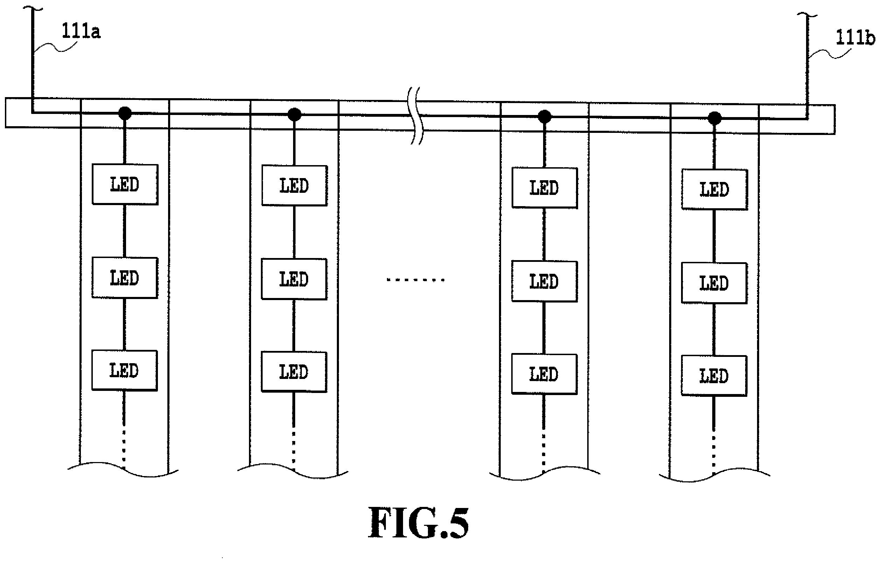

Fig. 5 is a schematic diagram of a structure of wirings of the display panel. As mentioned above, the number of bars included in the display panel is 32 according to the present embodiment. Therefore, each suspension line (control cable) supplies power and a control signal to each of the eight bars. According to the present embodiment, as illustrated in Fig. 5, each suspension line is connected to the eight bars in parallel. A printed circuit board is arranged to the each bar, and power and the control signal are supplied to the each LED via the wiring on the printed circuit board. Note that, Fig. 5 illustrates only the example, and the present invention is not limited to such wiring structure.

According to the present embodiment, as mentioned above, the light modulation of the LEDs is controlled with the suspension line for physically adjusting the position and the angle of the display panel in the stage space. Therefore, the display panel does not include a part that may weight such as an image processing unit or a power-supply unit as compared with a television for example. Thus, reduction in weight of the display panel is realized. Further, the display panel is formed with relatively light weight. It is possible to improve the responsivity for controlling the position and direction of the display panel in the stage space.

Note that, the description provides the example in which the suspension line is formed by integrating the power cable and the control cable in the present embodiment. However, the present invention is not limited to this. For example, a wireless module may be connected to the illumination light attached to the display panel and an instruction from the control unit may be issued wirelessly. Further, the each LED may have a memory or the like that stores the instructions and the control may be performed in accordance with the instructions pre-stored in the memory from the control unit. The control unit changes over time the position and angle of the display panel, the on/off timing of lighting of the each LED of the display panel, and the amount of lit-on light according to various programs corresponding to the representation. Obviously, the control unit may issue an instruction to fix the display panel at a predetermined time, a predetermined position, and a predetermined angle.

Returning to Fig. 3, next, a description provides with control of the position and angle of the display panel in the stage space. As mentioned above, the display panel 121 is supported with the four corners thereof by using the four suspension lines 111a to 111d. In the example in Fig. 3, lengths of the suspension lines 111a and 111b are made shorter than the lengths of the suspension lines 111c and 111d, thereby the display panel 121 is controlled to be directed in a direction illustrated by an arrow in Fig. 3. Thus, it is possible to control the angle of the display panel as well as the position in the height direction of the display panel in the space of the stage by changing the length of the suspension line. The lengths of the suspension lines can be arbitrarily adjusted in accordance with the instruction to each of the elevating units from the control unit 130.

In the present embodiment, a plurality of display panels for arbitrarily changing the position and angle is used. As mentioned above, the responsivity of the display panel is high in the case of controlling the position and angle of the display panel in the space of the stage. Thus, it is possible to present a greatly novel representation particularly in the case of a dynamic representation by using the display panel as mentioned above. The dynamic representation means that the position and angle of the display panel are changed or a display image (video image) is properly changed in timeline. According to the present embodiment, a plurality of (a large number of) the display panels is provided, thereby enabling a novel representation. For example, square is formed by arranging three display panels in the vertical direction and three display panels in the horizontal direction. In this case, the display panels are dynamically controlled at a stereoscopic position with depth in the space of the stage. Further, the angle of the display panel and the displayed image (video image) are dynamically controlled, and therefore the audience can feel a video effect with a sense of depth. Furthermore, as compared with the technology in Japanese Patent No. 5173231, the density of the LEDs can be easily increased, thereby varying expressible contents.

Note that the display panel is dynamically controlled at the stereoscopic position, that is, in the case of prescribing predetermined contents in timeline, for example, a signal for adjusting the amount of winding up or the amount of winding down of the suspension line of the each elevating unit at a predetermined timing in timeline is output from the control unit to the elevating unit and, in response to the signal, the elevating unit winding up/down the suspension line with the motor, and thus the stereoscopic position and the angle of the display panel can be changed. Further, the displayed image (video image) is dynamically controlled, that is, similarly in the case of prescribing predetermined contents in timeline, the control unit outputs the signal for controlling the light modulation of the illumination light included in the each display panel at a predetermined timing in timeline, thereby changing the displayed contents.

An effect of the present embodiment is supplemented, as compared between the representation similar to the present embodiment and a conventional video representation method. For example, in the case of representation a video image on the stage, conventionally, a large-scaled screen and a large-scaled television are set on the stage. However, the large-scaled screen is just the background. That is, the video effect is exhibited only to the front side of the screen. Further, a visible video effect is only two-dimensional video display. On the other hand, in the present embodiment, the position and angle of the display panel in the height direction are dynamically controlled as mentioned above and the display panel also has property of transmission. Therefore, it is possible to visually recognize the video effect both on the inside and outside of the display panel. Further, it is possible to provide stereoscopic video contents with depth.

Furthermore, conventionally, there is a method called projection mapping for projecting a video image to an object or the like (e.g., a building) physically having a three-dimensional shape. With the method, a video image is projected to a large set-piece with depth, for example, on the stage, thereby realizing a three-dimensional video experience. However, it is prescribed that a set piece as a projection target is prepared for the projection mapping, and the large set-piece as mentioned above is a limitation for the representation. The display panel of the present embodiment may fall down from the ceiling according to the necessity and rise up to the ceiling in a scene in which the display panel is unnecessary, and is not the limitation for the stage representation. Therefore, the responsivity at a switching time of the representation can be improved without changing an extensive stage arrangement. Further, a physical stereoscopic shape can be formed with combination of a plurality of display panels and angles of the display panels, thereby providing a video experience with a sense of depth without a sense of strangeness.

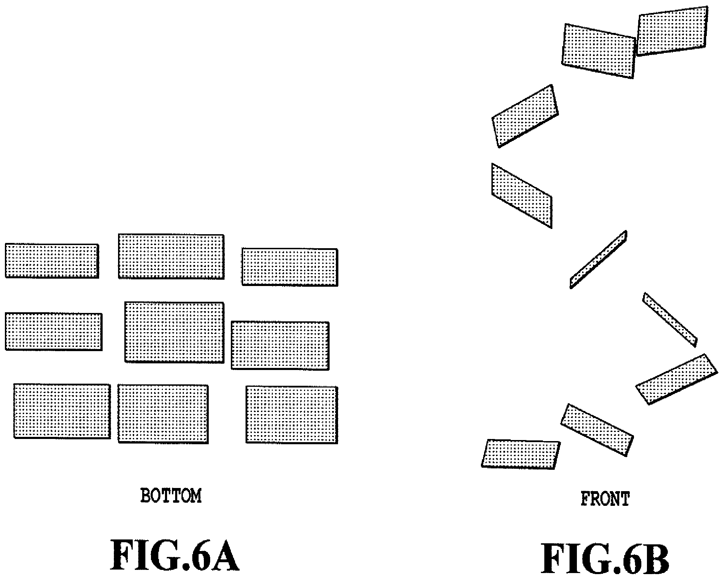

Figs. 6A and 6B are diagrams illustrating a video effect with a sense of depth. Referring to Figs. 6A and 6B, a video experience with a sense of depth is described in the case of using nine display panels in total having three display panels in the vertical direction and three display panels in the horizontal direction. Fig. 6A is a diagram illustrating one cut-out scene of a representation in the case of viewing a ceiling part from directly below the stage. Fig. 6B is a diagram illustrating the same cut-out scene as that in Fig. 6A in the case of viewing the stage from the audience side. In Figs. 6A and 6B, an example of a representation for flying the display panel in the air is illustrated. In Figs. 6A and 6B, a still status is illustrated. However, the respective display panels are actually controlled at an arbitrary height or angle, and display contents are also controlled. As a consequence, in viewpoint of audience, a plurality of display panels seems like scattering and falling petals from the ceiling to the ground with a novel representation.

Although the representation example is provided with dynamically changing the position, the angle, and the display contents of the display panel in Figs. 6A and 6B, the present embodiment is not limited to the structure of the dynamic change. For example, the position and the angle of the display panel may be partially fixed and the display contents may be changed.

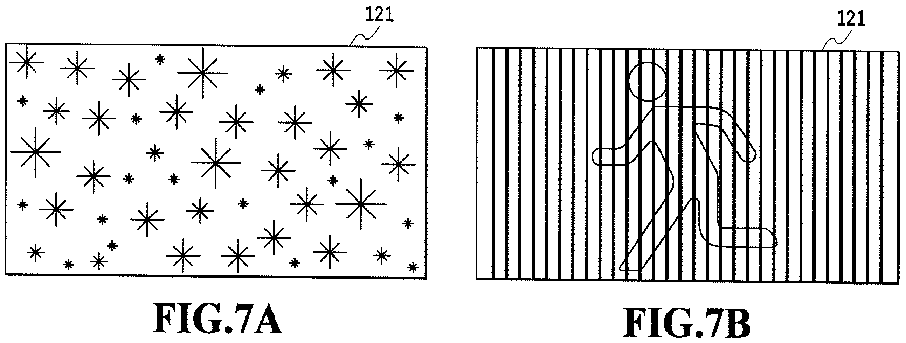

Figs. 7A and 7B are diagrams illustrating an example of an effect according to the present embodiment. In Fig. 7A, the display panel is arranged to the front side of the stage, and such a scene is illustrated that an artist exists at the back of the display panel. Herein, the respective LEDs of the display panel 121 are lit on with the largest amount of light. In this state, it is not possible to check a state of the artist at the back of the display panel 121 from the audience. In this state, the respective LEDs of the display panel 121 are lit off. Then, as illustrated in Fig. 7B, the audience can check the artist at the back of the display panel. As mentioned above, the display panel includes transmittive acrylic bars in slit shapes with transmittivity. Therefore, even in the case where the display panel is arranged between the artist and the audience, the audience can check the artist at the back of the display panel. As mentioned above, according to the present embodiment, the representation with high responsivity can be performed only by controlling LEDs.

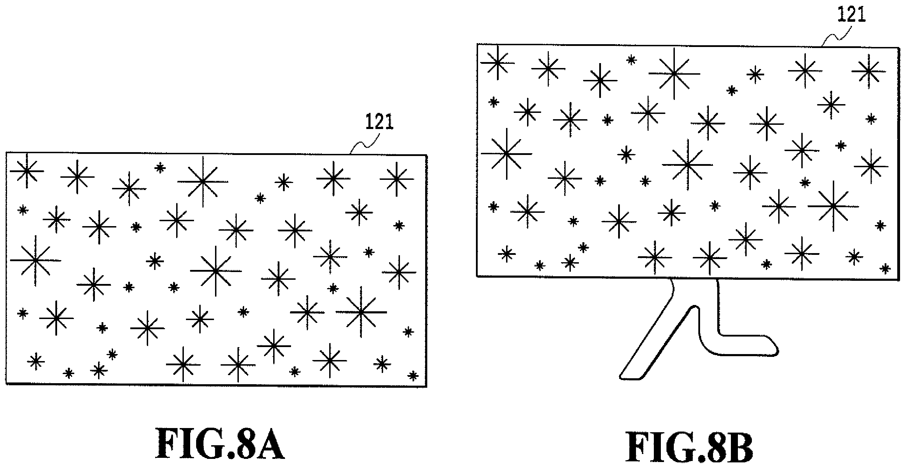

Figs. 8A and 8B are diagrams illustrating an example of an effect according to the present embodiment. Fig. 8A illustrates the same scene as that in Fig. 7A. Fig. 8B is a diagram illustrating a cut-out scene for bringing up the display panel in the state of Fig. 8A. As mentioned above, it is possible to provide an inexperienced representation by dynamically controlling the up/down-motions of the display panel. Although not illustrated, Figs. 8A and 8B show one scene in which a pyramid seems to appear on the stage by adjusting the height and direction of the panel step-by-step towards the depth of the stage from the direction of the audience of the stage. Fig. 8A illustrates a panel at an entrance of the pyramid. In this state, for example, as illustrated in Fig. 8B, such a representation can be performed that a door opens and the artist appears from the pyramid by pulling a part of the display panels upward. As mentioned above, a novel representation-effect can be obtained by performing only up/down-motions of the display panel.

As mentioned above, the stage representation according to the present embodiment is performed, thereby arbitrarily changing the space of the stage. That is, a proscenium of the stage viewed from the audience can be arbitrarily changed. In the case of changing the proscenium, conventionally, an extensive large set-piece or the like is required. However, by using the display panel described in the present embodiment, the stage space with a rectangular-shaped proscenium viewed from the audience can be generally changed to stage space with an arbitrary shape immediately. For example, by forming the pyramid-shaped object as mentioned above, the proscenium is immediately changed from a rectangle to a triangle. On the other hand, the proscenium is immediately changed to the original one. Obviously, it is possible to change the proscenium with a free shape such as a circle as well as a triangle.

As mentioned above, according to the present embodiment, a novel video-representation can be performed. Further, since the proscenium can be arbitrarily changed, such a novel representation can be performed that the stage space is immediately switched.

[Second embodiment]

In the first embodiment, the LEDs are arranged to one side of the display panel. In the second embodiment, the LEDs are arranged on both sides of the display panel as an example . Note that, even in the case of arranging the LEDs on both sides of the display panel, a relationship between the elevating unit and the suspension line has the same structure as that described in Fig. 3.

Note that, in the case of arranging the LEDs on both sides, the number of control cables included in the suspension line may be increased depending on a necessary number of channels.

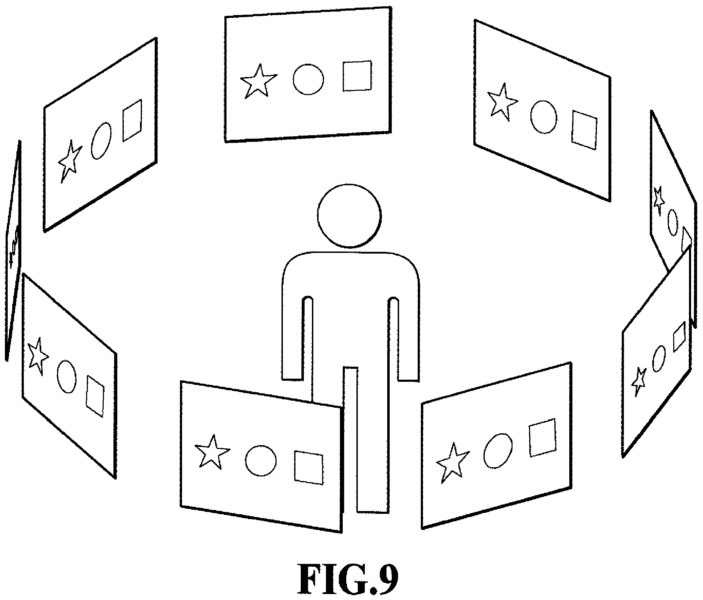

Fig. 9 is a diagram illustrating an example of an effect according to the second embodiment. As illustrated in Figs. 8A and 8B, the display panel is arranged, for example, circularly. Contents A are displayed on the front side of the display panel at a position on the left of the stage and the rear side of the display panel at a position on the right of the stage. On the other hand, similarly, the same contents A are displayed on the rear side of the display panel at a position on the left of the stage and the front side of the display panel at a position on the right of the stage. With the structure as mentioned above, the same contents can be viewed by audience on both the right and the left of the stage. Obviously, it is possible to view the same contents at any position of the audience by displaying the contents A also on the display panel at a position on the front side of the stage. Further, a video image may be displayed differently depending on the each position, in place of the same contents.

Even in the case where the LEDs are arranged on both sides, the display panel has transmittivity as described in the first embodiment. Therefore, the audience can check the contents displayed on the display panel on the rear side of the artist, thereby further widening an expression range of the representation.

[Other embodiments]

In the respective embodiments described above, the LEDs are attached to the inside of the frame of the display panel as an example. However, the LEDs may be arranged to the frame itself of the display panel. In addition, the plurality of elevating units 101 may be attached to the baton 140, each of the plurality of suspension lines 111 may be suspended from each of the plurality of elevating units 101 respectively, and each of the plurality of bars 210 may be suspended from each of the plurality of suspension lines 111 respectively. In this structure, each the plurality of bars 210 elevates independently, thereby enabling a further different representation.

Further, in the example described above, it is described that the display panel is used for the stage of a theater, a concert hall, a television studio, or the like. However, the present invention is not limited to this. For example, the present invention can be applied to a representation of an outside exhibition or a representation of attraction at a theme park. That is, the "stage" described in the present specification indicates space as a representation target.

Furthermore, in the example described above, the display panel is suspended with the four suspension lines. However, the height and direction of the display panel can be arbitrarily controlled in the space of the stage, and the present invention is not limited to this.

Moreover, in the respective embodiments described above, the illumination light arranged to the display panel is the LED as an example. However, the present invention is not limited to this.

The above description is only an example, and various embodiments can be adopted depending on a representation target, effect, or the like.

While the present invention has been described with reference to exemplary embodiments, it is to be understood that the invention is not limited to the disclosed exemplary embodiments. The scope of the invention is defined by the following claims.

**Claims**

1. A stage representation system comprising:

   a plurality of sets of at least four elevating units (101a, 101b, 101c, 101d) connected to at least four suspension lines (111a, 111b, 111c, 111d) respectively;

a plurality of display panels (121, 122, 123) suspended from a ceiling of a stage respectively, each of the plurality of display panels (121, 122, 123) is suspended via the at least four suspension lines (111a, 111b, 111c, 111d) and includes a frame (200) and a plurality of bars (210), each of the plurality of bars (210) extends from one end to other end in the frame (200), and a plurality of illumination lights (220) are fixed to each of the plurality of bars (210); and

a control unit (130) configured, depending on a content for expression, to dynamically move the plurality of display panels (121, 122, 123) respectively in a vertical direction and at a predetermined angle in space of the stage by controlling lengths of the at least four suspension lines (111a, 111b, 111c, 111d) individually, and adjust dynamically display of the plurality of display panels (121, 122, 123) respectively by controlling on/off timing for lighting of the plurality of illumination lights (220) individually and modulating an amount of light of the plurality of illumination lights (220) individually so that a predetermined dynamic representation is provided on the stage.

2. The stage representation system according to claim 1, wherein
   the base material includes an acrylic material.

3. The stage representation system according to any one of claim 1 or 2, wherein
   each of the plurality of display panels (121, 122, 123) has the plurality of illumination lights (220) on both sides of the base material, respectively.

4. The stage representation system according to any one of claims 1 to 3, wherein
   each of the at least four suspension lines (111a, 111b, 111c, 111d) is formed by integrating a power-supply cable (401) and a control cable (402) that transmits the control signal.

5. The stage representation system according to any of claims 1 to 4, wherein
   the illumination light (220) is an LED.

6. A stage representation method of providing a predetermined dynamic representation implemented in a system including:

   a plurality of sets of at least four elevating units (101a, 101b, 101c, 101d) connected to at least four suspension lines (111a, 111b, 111c, 111d) respectively;

a plurality of display panels (121, 122, 123) suspended from a ceiling of a stage respectively, each of the plurality of display panels (121, 122, 123) is suspended via the at least four suspension lines (111a, 111b, 111c, 111d) and includes a frame (200) and a plurality of bars (210), each of the plurality of bars (210) extends from one end to other end in the frame (200), and a plurality of illumination lights (220) are fixed to each of the plurality of bars (210); and

a control unit (130) configured to control, wherein the stage representation method comprising the steps of:

outputting, by the control unit (130), a signal that moves, depending on a content for expression, the plurality of display panels (121, 122, 123) respectively in a vertical direction and at a predetermined angle in space of the stage by controlling lengths of the at least four suspension lines (111a, 111b, 111c, 111d) individually; and
outputting, by the control unit (130), a signal that adjusts, depending on a content for expression, dynamically display of the plurality of display panels (121, 122, 123) respectively by controlling on/off timing for lighting of the plurality of illumination lights (220) individually and modulating an amount of light of the plurality of illumination lights (220) individually.

**Patentansprüche**

1. Bühnendarstellungssystem mit:

einer Mehrzahl von Sätzen von mindestens vier Hebeeinheiten (101a, 101b, 101c, 101d), die mit mindestens vier Aufhängungsleitungen (111a, 111b, 111c, 111d) jeweils verbunden sind;
einer Mehrzahl von Anzeigetafeln (121, 122, 123), die von einer Decke einer Bühne jeweils abgehängt sind, wobei jede von der Mehrzahl von Anzeigetafeln (121, 122, 123) über die mindestens vier Aufhängungsleitungen (111a, 111b, 111c, 111d) aufgehängt ist und einen Rahmen (200) und eine Mehrzahl von Stangen (210) aufweist, wobei jede von der Mehrzahl von Stangen (210) sich in dem Rahmen (200) von einem Ende zu einem anderen Ende erstreckt, und eine Mehrzahl von Beleuchtungslampen (220) an jeder von der Mehrzahl von Stangen (210) befestigt ist; und
einer Steuerungseinheit (130), die konfiguriert ist, um in Abhängigkeit von einem Ausdrucksinhalt die Mehrzahl von Anzeigetafeln (121, 122, 123) dynamisch jeweils in einer vertikalen Richtung und um einen vorbestimmten Winkel im Raum der Bühne zu bewegen, indem die Längen der mindestens vier Aufhängungsleitungen (111a, 111b, 111c, 111d) individuell gesteuert werden, und um eine dynamische Anzeige von der Mehrzahl von Anzeigetafeln (121, 122, 123) jeweils durch Steuerung einer Ein/Aus-Zeit für das Leuchten der Mehrzahl von Beleuchtungslampen (220) individuell dynamisch einzustellen und eine Lichtmenge der Mehrzahl von Beleuchtungslampen (220) individuell zu modulieren, so dass eine vorbestimmte dynamische Darstellung auf der Bühne geschaffen wird.

2. Bühnendarstellungssystem nach Anspruch 1, bei dem das Basismaterial ein Acrylmaterial aufweist.

3. Bühnendarstellungssystem nach einem der Ansprüche 1 oder 2, bei dem jede von der Mehrzahl von Anzeigetafeln (121, 122, 123) die Mehrzahl von Beleuchtungslampen (220) auf beiden Seiten des Basismaterials jeweils aufweist.

4. Bühnendarstellungssystem nach einem der Ansprüche 1 bis 3, bei dem jede von den mindestens vier Aufhängungsleitungen (111a, 111b, 111c, 111d) gebildet ist durch Integrieren eines Leistungsversorgungskabels (401) und eines Steuerungskabels (402), das das Steuerungssignal überträgt.

5. Bühnendarstellungssystem nach einem der Ansprüche 1 bis 4, bei dem die Beleuchtungslampe (220) eine LED ist.

6. Bühnendarstellungsverfahren zum Schaffen einer vorbestimmten dynamischen Darstellung, das in einem System implementiert wird, das aufweist:

eine Mehrzahl von Sätzen von mindestens vier Hebeeinheiten (101a, 101b, 101c, 101d), die mit mindestens vier Aufhängungsleitungen (111a, 111b, 111c, 111d) jeweils verbunden sind;
eine Mehrzahl von Anzeigetafeln (121, 122, 123), die von einer Decke einer Bühne jeweils abgehängt sind, wobei jede von der Mehrzahl von Anzeigetafeln (121, 122, 123) über die mindestens vier Aufhängungsleitungen (111a, 111b, 111c, 111d) aufgehängt ist und einen Rahmen (200) und eine Mehrzahl von Stangen (210) aufweist, wobei jede von der Mehrzahl von Stangen (210) sich in dem Rahmen (200) von einem Ende zu einem anderen Ende erstreckt, und eine Mehrzahl von Beleuchtungslampen (220) an jeder von der Mehrzahl von Stangen (210) befestigt ist; und
eine Steuerungseinheit (130), die konfiguriert ist zum Steuern, wobei das Bühnendarstellungsverfahren die Schritte aufweist:

Ausgeben eines Signals durch die Steuerungseinheit (130), das in Abhängigkeit von einem Darstellungsinhalt die Mehrzahl von Anzeigetafeln (121, 122, 123) jeweils in einer vertikalen Richtung und um einen vorbestimmten Winkel im Raum der Bühne bewegt, indem die Längen der mindestens vier Aufhängungsleitungen (111a, 111b, 111c, 111d) individuell gesteuert werden; und

Ausgeben eines Signals durch die Steuerungseinheit (130), das in Abhängigkeit von einem Darstellungsinhalt dynamisch die Anzeige der Mehrzahl von Anzeigetafeln (121, 122, 123) jeweils einstellt durch Steuern einer Ein/Aus-Zeit zum individuellen Beleuchten der Mehrzahl von Beleuchtungslampen (220) und individuellen Modulieren einer Lichtmenge der Mehrzahl von Beleuchtungslampen (220).

## Revendications

1. Système de représentation de scène comprenant :

une pluralité d'ensembles d'au moins quatre unités élévatrices (101a, 101b, 101c, 101d) reliées à au moins quatre lignes de suspension (111a, 111b, 111c, 111d) respectivement ;
une pluralité de panneaux d'affichage (121, 122, 123) suspendus à un plafond d'une scène respectivement, chaque panneau de la pluralité de panneaux d'affichage (121, 122, 123) est suspendu via au moins quatre lignes de suspension (111a, 111b, 111c, 111d) et comprend un cadre (200) et une pluralité de barres (210), chaque barre de la pluralité de barres (210) s'étend d'une extrémité à une autre extrémité dans le cadre (200), et une pluralité de lumières d'éclairage (220) sont fixés sur chaque barre de la pluralité de barres (210) ; et
une unité de commande (130) configurée, en fonction d'un contenu d'expression, pour déplacer dynamiquement la pluralité de panneaux d'affichage (121, 122, 123) respectivement dans une direction verticale et à un angle prédéterminé dans l'espace de la scène en commandant des longueurs d'au moins quatre lignes de suspension (111a, 111b, 111c, 111d) individuellement, et régler dynamiquement l'affichage de la pluralité de panneaux d'affichage (121, 122, 123) respectivement en commandant la temporisation marche/arrêt pour éclairer la pluralité des lumières d'éclairage (220) individuellement et moduler une quantité de lumière de la pluralité de lumières d'éclairage (220) individuellement afin qu'une représentation dynamique prédéterminée soit fournie sur la scène.

2. Système de représentation de scène selon la revendication 1, dans lequel le matériau de base comprend un matériau acrylique.

3. Système de représentation de scène selon l'une quelconque des revendications 1 ou 2, dans lequel chaque panneau de la pluralité de panneaux d'affichage (121, 122, 123) comporte la pluralité des lumières d'éclairage (220) des deux côtés du matériau de base, respectivement.

4. Système de représentation de scène selon l'une quelconque des revendications 1 à 3, dans lequel chacune des au moins quatre lignes de suspension (111a, 111b, 111c, 111d) est formée en intégrant un câble d'alimentation (401) et un câble de commande (402) qui transmet le signal de commande.

5. Système de représentation de scène selon l'une quelconque des revendications 1 à 4, dans lequel la lumière d'éclairage (220) est une LED.

6. Procédé de représentation de scène pour fournir une représentation dynamique prédéterminée mise en oeuvre dans un système comprenant :

une pluralité d'ensembles d'au moins quatre unités d'élévation (101a, 101b, 101c, 101d) reliées à au moins quatre lignes de suspension (111a, 111b, 111c, 111d) respectivement ;
une pluralité de panneaux d'affichage (121, 122, 123) suspendus à un plafond d'une scène respectivement, chaque panneau de la pluralité de panneaux d'affichage (121, 122, 123) est suspendu via les au moins quatre lignes de suspension (111a, 111b, 111c, 111d) et comprend un cadre (200) et une pluralité de barres (210), chacune des barres de la pluralité de barres (210) s'étend d'une extrémité à une autre extrémité dans le cadre (200) et une pluralité des lumières d'éclairage (220) est fixée à chacune des pluralité de barres (210) ; et
une unité de commande (130) configurée pour commander, dans lequel le procédé de représentation de scène comprenant les étapes consistant à :

délivrer, par l'unité de commande (130), un signal qui déplace, en fonction d'un contenu à exprimer, la pluralité de panneaux d'affichage (121, 122, 123) respectivement dans une direction verticale et à un angle prédéterminé dans l'espace de la scène en commandant les longueurs d'au moins quatre lignes de suspension (111a, 111b, 111c, 111d) individuellement ; et

délivrer, par l'unité de commande (130), un signal qui ajuste, en fonction d'un contenu d'expression, l'affichage dynamique de la pluralité de panneaux d'affichage (121, 122, 123) respectivement en commandant la temporisation marche/arrêt pour éclairer la pluralité des lumières d'éclairage (220) individuellement et moduler une quantité de lumière de la pluralité des lumières d'éclairage (220) individuellement.

**FIG.1**

EP 3 130 382 B1

**FIG.2**

EP 3 130 382 B1

**FIG.3**

101c

140

101d

101a

101b

111a

111c

111b

111d

121

EP 3 130 382 B1

111a

401 402

403

# FIG.4

**FIG.5**

EP 3 130 382 B1

**FIG.6B**

FRONT

**FIG.6A**

BOTTOM

121

# FIG.7B

121

# FIG.7A

**FIG.8A**

**FIG.8B**

EP 3 130 382 B1

**FIG.9**

**EP 3 130 382 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5173231 B
- US 20150176788 A1
- US 20130294067 A1